# EUROPEAN PATENT SPECIFICATION

(11) **EP 4 091 842 B1**
(45) Date of publication and mention of the grant of the patent: **20.03.2024**
(21) Application number: 22174168.9
(22) Date of filing: 18.05.2022
(51) Int. Cl.: B60C 11/03, B60C 11/12

(54) **TIRE WITH HYBRID SIPE PATTERN**
REIFEN MIT HYBRIDEM LAMELLEN-MUSTER
PNEU AVEC MOTIF DE LAMELLE HYBRIDE

(30) Priority: 21.05.2021 US 202117326476; 14.06.2021 US 202163210118 P
(43) Date of publication of application: 23.11.2022
(73) Proprietor: The Goodyear Tire & Rubber Company, Akron, OH 44316 (US)
(72) Inventor: CARON, Arnaud, B-6750 Signeulx (BE); FULOP, Tibor, L-9648 Erpeldange (LU); GEORGES, Damian Wilhelm, L-7260 Bereldange (LU); POLFER, Pit Jean-Pierre Fernand, L-7383 Lorentzweiler (LU); BHAGAVATHAPURAM SRISAILAPATHY, Ananth, L-9024 Ettelbruck (LU)
(74) Representative: Kutsch, Bernd

(56) References cited:
- WO-A1-2011/125293
- WO-A1-2017/023355
- JP-A- 2001 063 322
- JP-A- 2017 218 048

## Description

### Technical Field

The present invention relates to a tire having a plurality of sipes that is particularly useful as an all-season tire or winter tire.

### Technical Background

All-season tires and winter tires require good performance and traction characteristics on snow covered road surfaces. Such tires are therefore typically provided with a plurality of sipes formed in one or more tread blocks and/or one or more ribs of the tread portion of the tire.

The tires having sipes exhibit improved snow performance, but dry and wet performance of the tire may deteriorate because the finely-sectioned blocks have limited rigidity. To overcome these drawbacks, the tire comprises three-dimensional sipes that change direction not only at a ground contact surface of a tread but also in the depth direction thereof, to facilitate contact between the finely sectioned block portions thereof and thus minimize or suppress the deformation of the finely sectioned block portions. However, it was found that such a configuration may deteriorate the snow performance. As a result, it was found difficult to improve at the same time the snow performances, the wet performance and the dry performance.

EP 0 810 104 A1 discloses a tread for winter tires consisting of elastomeric material extending in a circumferential direction around the axis of rotation of the tire. The tread includes several grooves which extend circumferentially and multiple grooves which extend laterally between a pair of shoulders, delimiting elastomeric blocks. The elastomeric blocks include sipes delimiting two opposing surfaces within the blocks. The sipes may define a portion of a cylindrical surface over at least a part of their radial and lateral area.

EP 3 446 891 A1 discloses a tire comprising a sipe extending in a predetermined direction and formed on a tire tread portion, wherein in a tread surface view, the sipe includes a first straight sipe extended linearly in the predetermined direction, a second straight sipe extending linearly in the predetermined direction, and a projection portion formed between the first straight sipe and the second straight sipe extending in a direction crossing the predetermined direction. The projection portion includes a straight portion extending linearly, a first inclined portion continued to one end of the straight portion and one end of the first straight sipe and inclined to spread toward an outer side in the predetermined direction from the one end of the straight portion, and a second inclined portion continued to another end of the straight portion and one end of the second straight sipe and inclined to spread toward an outer side in the predetermined direction from the another end of the straight portion; and a period defined by a length of the projection portion in the predetermined direction is 0.8 times to 2.0 times as large as a sipe depth defined by a length of the sipe between the tire tread portion and a bottom of the sipe.

US 2015/0266346 A discloses a pneumatic tire having a plurality of sipes formed in the land portions of a tread thereof, each extending in the tire width direction, wherein in a cross-section of the land portion orthogonal to the sipe extending direction, provided that an imaginary sipe main direction links two ends in the tire radial direction of each sipe, at least two of the sipes are "inclined sipes". Each inclined sipe has a sipe main direction inclined relative to the tire radial direction; and has inner bent portions each protruding relative to the sipe main direction with peaks positioned deeper than 20% of the sipe depth. The sipe main direction(s) of at least one of the inclined sipes are inclined in a direction opposite, relative to the tire radial direction, to the sipe main direction of any of the other inclined sipes.

US 2015/306915 A relates to a snow tire tread comprising a plurality of blocks separated by grooves. The blocks are provided with incisions that are separated into multiple parts from a certain depth, known as complex incisions. In sectional view, each complex incision has a first straight part extending radially from the running surface of the tread and a second part extending from the first part and comprising at least two branches, each branch comprising an end. The tread also comprises cavities, each cavity extending between the branches of a complex incision. Each cavity comprises a base located at the same level as the ends of the branches. The cavities and the grooves of the tread are configured such that the tread has an end-of-wear surface grooving rate greater than or equal to 35%. In addition, the distance (D) between two branches of two adjacent complex incisions is at least equal to 2 mm.

There is a need for an improved combination of stiffness and one or more of friction, traction and braking performance of the tire on snow. There is a need for an improved compromise between stiffness and friction coefficient of the tire, in particular there is a need to find an improved compromise between stiffness of the tire, traction and friction coefficient on snow.

WO 2017/023355 A1 describes a tire in accordance with the preamble of claim 1.

Other tires showing treads having curved sipes, inclined sipes or sipes having a fold are known from JP 2001 063322 A1, JP 2017 218048 A and WO 2011/125293.

### Summary of the Invention

The invention relates to a tire in accordance with claim 1.

Dependent claims refer to preferred embodiments of the invention.

One or more of the above needs can be fulfilled by the tire according to the invention wherein the tire comprises a particular sipe pattern comprising, in the circumferential direction of the tire, one or more straight sipes extending in the radial direction of the tire arranged between two or more inclined sipes. The use of such a sipe pattern allows a good compromise between stiffness and one or more of friction, traction and braking performance of the tire on snow. It has also been found that the use of such a sipe pattern allows a good compromise between stiffness and friction coefficient, such as a compromise between stiffness, friction coefficient, traction performances and braking performances.

According to a first aspect, the invention is directed to a tire with a tread portion comprising one or more tread blocks and/or one or more ribs, and having a plurality of sipes formed in one or more tread blocks and/or one or more ribs, each sipe being opened at the radially outer surface of a tread block or a rib; wherein the tire has at least one sipe pattern (or arrangement) comprising, in the circumferential direction of the tire, one or more straight sipes extending in the radial direction of the tire and two or more inclined sipes; wherein at least one straight sipe is arranged between two inclined sipes; wherein the inclined sipes have a main sipe direction that is inclined by an angle α relative to the radial direction, the main sipe direction of an inclined sipe being the line linking the open end of the sipe at the radially outer surface of a tread block or a rib and an innermost end of the sipe in the tire radial direction; wherein one or more inclined sipes are positively inclined sipes and one or more inclined sipes are negatively inclined sipes; the one or more positively inclined sipes being inclined in a direction opposite, relative to the tire radial direction, to the one or more negatively inclined sipes; and wherein one or more inclined sipes comprise at least one fold dividing the inclined sipe in two or more sub-portions being successive along the length of the sipe; the length of a sipe being the distance from its open end to its innermost end.

According to a second aspect, the invention is directed to a tire with a tread portion comprising one or more tread blocks and/or one or more ribs, and having a plurality of sipes formed in one or more tread blocks and/or one or more ribs, each sipe being opened at the radially outer surface of a tread block or a rib; wherein one or more blocks and/or one or more ribs have at least one sipe pattern (or arrangement) comprising, in the circumferential direction of the tire, one or more straight sipes extending in the radial direction of the tire and two or more inclined sipes; wherein at least one straight sipe is arranged between two inclined sipes; wherein the inclined sipes have a main sipe direction that is inclined by an angle α relative to the radial direction, the main sipe direction of an inclined sipe being the line linking the open end of the sipe at the radially outer surface of a tread block or a rib and an innermost end of the sipe in the tire radial direction; wherein one or more inclined sipes are positively inclined sipes and one or more inclined sipes are negatively inclined sipes; the one or more positively inclined sipes being inclined in a direction opposite, relative to the tire radial direction, to the one or more negatively inclined sipes; and wherein at least two inclined sipes have different depth wherein the one or more inclined sipes being the deepest sipes are long inclined sipes and have a defined depth and at least one inclined sipe is a short inclined sipe having a depth that is ranging from 30% to 70% of the depth of the one or more long inclined sipes; the depth of a sipe being determined according to the radial direction of the tire.

According to a third aspect, the invention is directed to a tire with a tread portion which is divided in the tire width direction between (or in) a central portion arranged between two shoulder portions, and at least one of the central portion or the shoulder portions are rib-shaped, or are block-shaped and comprise tread blocks delimited by at least one circumferential groove extending in the tire circumferential direction and at least two lateral grooves communicating with the at least one circumferential groove; the tire having a plurality of sipes formed in one or more tread blocks and/or one or more ribs, each sipe being opened at the radially outer surface of a tread block or a rib; wherein one or more blocks and/or one or more ribs have a sipe pattern (or arrangement) comprising, in the circumferential direction of the tire, one or more straight sipes extending in the radial direction of the tire and two or more inclined sipes; wherein at least one straight sipe is arranged between two inclined sipes; wherein the inclined sipes have a main sipe direction that is inclined by an angle α relative to the radial direction, the main sipe direction of an inclined sipe being the line linking the open end of the sipe at the radially outer surface of a tread block or a rib and an innermost end of the sipe in the tire radial direction; wherein one or more inclined sipes are positively inclined sipes and one or more inclined sipes are negatively inclined sipes; the one or more positively inclined sipes being inclined in a direction opposite, relative to the tire radial direction, to the one or more negatively inclined sipes; wherein at least two sipes of the sipe pattern have a depth of at least 6 mm and wherein one or more inclined sipes comprise at least one fold dividing the inclined sipe in two or more sub-portions being successive along the length of the sipe; and further wherein the one or more straight sipes and the two or more inclined sipes have directions divergent from each other from their open ends to their innermost ends; the length of a sipe being the distance from its open end to its innermost end.

According to a fourth aspect, the invention is directed to a tire with a tread portion which is divided in the tire width direction between (or in) a central portion arranged between two shoulder portions and at least one of the central portion or the shoulder portions are rib-shaped or are block-shaped and comprise tread blocks delimited by at least one circumferential groove extending in the tire circumferential direction and at least two lateral grooves communicating with or joining the at least one circumferential groove; the tire having a plurality of sipes formed in one or more tread blocks and/or one or more ribs, each sipe being opened at the radially outer surface; wherein one or more blocks and/or one or more ribs have a sipe pattern comprising, in the circumferential direction of the tire, one or more straight sipes extending in the radial direction of the tire and two or more inclined sipes; wherein at least one straight sipe is arranged between two inclined sipes; wherein the inclined sipes have a main sipe direction that is inclined by an angle α relative to the radial direction, the main sipe direction of an inclined sipe being the line linking the open end of the sipe at the radially outer surface of a tread block or a rib and an innermost end of the sipe in the tire radial direction; wherein one or more inclined sipes are positively inclined sipes and one or more inclined sipes are negatively inclined sipes; the one or more positively inclined sipes being inclined in a direction opposite, relative to the tire radial direction, to the one or more negatively inclined sipes; and wherein the one or more straight sipes and the two or more inclined sipes have directions divergent from each other from their open ends to their innermost ends.

The following can be used to further define the tire according to the first aspect, the second aspect, the third aspect or the fourth aspect. In the present description, the sipes are transversal sipes and extend in the width direction of the tire.

For example, the tire is a pneumatic tire or a non-pneumatic tire; with preference, the tire is a pneumatic tire. The tread pattern of the tire can be symmetric or asymmetric. For example, the tire has a symmetric tread pattern. For example, the tire has a directional tread pattern.

It is preferred that at least two sipes of the sipe pattern have a depth of at least 6 mm; preferably at least 7 mm; and more preferably at least 8 mm.

It is preferred that at least one straight sipe is arranged between at least one positively inclined sipe and at least one negatively inclined sipe.

With regard to the inclined sipes the angle α of inclination shown by the main sipe direction of the inclined sipes is typically within the range of 5° to 30° relative to the radial direction of the tire; preferably within the range of 10° to 27°; more preferably within the range of 15° to 25°; and even more preferably within the range of 18° to 22°.

The angle α of inclination shown by the main sipe direction of at least one positively inclined sipes is different from the angle α of inclination shown by the main sipe direction of at least one negatively inclined sipe; with preference, the angle α of inclination shown by the main sipe direction of at least one positively inclined sipes is smaller than the angle α of inclination shown by the main sipe direction of at least one negatively inclined sipe.

For example, one or more inclined sipes have a straight sub-portion that extends in the tire radial direction and one or more inclined sub-portions. With preference, the straight sub-portion extends in the radial direction of the tire at a depth ranging from 5% to 20% of the total depth of the inclined sipe; preferably from 8% to 18%; more preferably from 10% to 15%. With preference, the straight sub-portion is arranged at the open end of the inclined sipe at the radially outer surface of a tread block or a rib. The depth of a sipe is determined in the radial direction of the tire.

In one embodiment of this invention, one or more inclined sipes have a first inclined sub-portion and at least a subsequent inclined sub-portion; wherein the angle β of inclination relative to the tire radial direction of the first inclined sub-portion is smaller than the angle γ of inclination of the one or more subsequent inclined sub-portion. With preference, none of the inclined sub-portions intersects the sipe main direction.

For example, the angle β of inclination relative to the tire radial direction of the first inclined sub-portion typically ranges from 5° to 20°; preferably from 8° to 18°; and more preferably from 10° to 15°.

With preference, the first inclined sub-portion has an innermost end in the tire radial direction arranged to be at a depth that is within the range of 40% to 70% of the total depth of the inclined sipe; preferably from 42% to 60%; and more preferably from 45% to 55 %. The depth of a sipe is determined in the radial direction of the tire.

In an embodiment, the one or more long inclined sipes have a first inclined sub-portion and at least a subsequent inclined sub-portion and the one or more short inclined sipes have a single inclined portion or sub-portion.

In an embodiment, the number of negatively inclined sipes is equal to or greater than the number of positively inclined sipes.

At least two inclined sipes extend to different depths wherein the one or more inclined sipes being the deepest sipes are long inclined sipes and have a defined depth and at least one inclined sipe is a short inclined sipe having a depth that is within the range of 30% to 70% of the depth of the one or more long inclined sipes; preferably within the range of 40% to 60%; and more preferably within the range of 45% to 55%.

For example, at least one long positively inclined sipe and at least one long negatively inclined sipe have a depth of at least 6 mm; preferably at least 7 mm, and more preferably at least 8 mm.

For example, the angle α of inclination shown by the main sipe direction of at least one long inclined sipe is different from the angle α of inclination shown by the main sipe direction of at least one short inclined sipe; with preference, the angle α of inclination shown by the main sipe direction of at least one long inclined sipe is smaller than the angle α of inclination shown by the main sipe direction of at least one short inclined sipe.

For example, the thickness shown by (or of) at least one long inclined sipe is equal to or greater than the thickness shown by (or of) at least one short inclined sipe.

It is preferred that the orientation of the inclined sipes in the sipe pattern is selected to have the main sipe direction of the one or more inclined sipes that are intersecting the main sipe direction of the one or more straight sipes outside the tire.

It is preferred that the bottom of each long inclined sipe is raised in the vicinity of a position where the long inclined sipe opens to a circumferential groove.

The one or more of the straight sipes have a main sipe direction that extends in the radial direction of the tire. In one embodiment of this invention, the one or more straight sipes have a reduced depth in comparison to the inclined sipes or at least the long inclined sipes, so that the one or more straight sipes are reduced straight sipes having a depth that is within the range of 30% to 70% of the depth of the one or more long inclined sipes; preferably within the range of 40% to 60%; and more preferably within the range of 45% to 55%. In one embodiment of this invention more than one of the straight sipes have a reduced depth as compared to the longest inclined sipes.

For example, at least one straight sipe has a depth of at least 6 mm; preferably at least 7 mm, more preferably at least 8 mm. For example, at least one long straight sipe has a depth of at least 6 mm; preferably at least 7 mm, and more preferably at least 8 mm.

For example, one or more straight sipes are forked sipes and have their radially inner portion is divided in two branches; with preference, the branches are inclined.

For example, one or more straight sipes are forked sipes and comprise a radially outer sub-portion opened at the tread surface and a radially inner sub-portion that is divided in two branches, wherein the radially outer portion is extending in the radial direction of the tire at a depth that is within the range of 30% to 70% of the total depth of the straight sipes. The depth of a sipe is determined in the radial direction of the tire.

It is preferred that the bottom of each long straight sipe is raised in the vicinity of a position where the long straight sipe opens to a circumferential groove.

### Description of the Drawings

Figure 1 is a plan view of a tire with a symmetric tread according to an embodiment of the invention.
Figure 2 is an enlarged partial view of a tread portion of the tire of Figure 1.
Figure 3 is a perspective view of a block of the tire of Figure 1 showing an example of a sipe pattern according to acomparative example.
Figure 4 is a view showing a cross-section in the circumferential direction of the tire of a comparative example of a block with a sipe pattern wherein the inclined sipes have i) a straight sub-portion extending in the tire radial direction and ii) one inclined sub-portion.
Figure 5 is a view showing a cross-section of another comparative example of a block with a sipe pattern in the circumferential direction of the tire wherein the inclined sipes have a first inclined sub-portion and at least a subsequent inclined sub-portion.
Figure 6 is a view similar to Figures 4 and 5 wherein features are combined, so that the inclined sipes have a straight sub-portion extending in the tire radial direction and more than one inclined sub-portion.
Figure 7 is a view similar to Figure 5 but illustrating the different angles of inclination of the several inclined sub-portions of the inclined sipes.
Figure 8 is a view similar to Figure 5 but according to a comparative example in which one or more straight sipes are forked.
Figure 9 is a view similar to Figure 8 but according to an embodiment of the invention in which at least two inclined sipes have a different depth.
Figure 10 is a view showing a cross-section of an embodiment of the invention of a block with a symmetrical sipe pattern.
Figure 11 is a view similar to Figure 5 but according to a comparative example with an asymmetrical sipe pattern.
Figure 12 is an enlarged partial view of a tread portion of an asymmetric tread according to an embodiment in which the tread pattern is directional.
Figure 13 is a view showing the radially outer surface of a block with a sipe pattern according to another embodiment of the invention.
Figure 14 is a view showing the radially outer surface of a block with a sipe pattern according to another embodiment of the invention.
Figure 15 is a view showing the radially outer surface of a block with a sipe pattern according to yet another embodiment of the invention.
Figure 16 shows a graph illustrating friction coefficient measurements.
Figure 17 shows a graph illustrating traction force measurements.
Figure 18 shows a graph comparing the results of friction coefficient measurements of different sipe patterns.

### Definitions

For purposes hereof, the following definitions are provided.

The terms "comprising", "comprises" and "comprised of" as used herein are synonymous with "including", "includes" or "containing", "contains", and are inclusive or openended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 includes 1, 2, 3, 4 and 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

The reference throughout this specification to "one embodiment" or "an embodiment" means that a particular feature, structure or characteristic described in connection with the embodiment is included in at least one embodiment of the present invention. The particular features, structures, characteristics or embodiments may be combined in any suitable manner, as would be apparent to a person skilled in the art from this invention, in one or more embodiments, as long as these fall within the scope of the claims. Furthermore, while some embodiments described herein include some but not other features included in other embodiments, combinations of features of different embodiments are meant to be within the scope of the invention and form different embodiments, as would be understood by those in the art, as long as these fall within the scope of the claims.

Unless otherwise defined, all terms used in the invention, including technical and scientific terms, have the meaning as commonly understood by one skilled in the art to which this invention belongs. By means of further guidance, definitions for the terms used in the description are included to better appreciate the teaching of the present invention.

"Asymmetric tread" means a tread that has a tread pattern not symmetrical to the center plane or the equatorial plane of the tire.

"Symmetric tread" means a tread that has a tread pattern symmetrical to the center plane or the equatorial plane of the tire.

"Circumferential" means lines or direction extending along the perimeter of the surface of the annular tread perpendicular to the axial direction.

"Axial" means lines or directions that are parallel to the axis of rotation of the tire.

"Groove" means an elongated void area in a tread that can extend circumferentially or laterally along the tread in a straight, curved or zigzag manner. Circumferentially and laterally extending grooves sometimes have common portions.

"Sipes" means (small) slots molded into the tread elements that subdivide the tread surface and may improve traction and/or braking performance. A sipe is narrower than a groove.

"Directional Tread Pattern" means a tread pattern designed for a specific direction of rotation of the tire.

"Rib" means a circumferentially extending strip of rubber on the tread which is defined or delimited by at least one circumferential groove and either a second groove or a lateral edge of the tread.

### Detailed Description of Preferred Embodiments of the Invention

The following is description of a pneumatic or non-pneumatic tire according to preferred embodiments of the present invention.

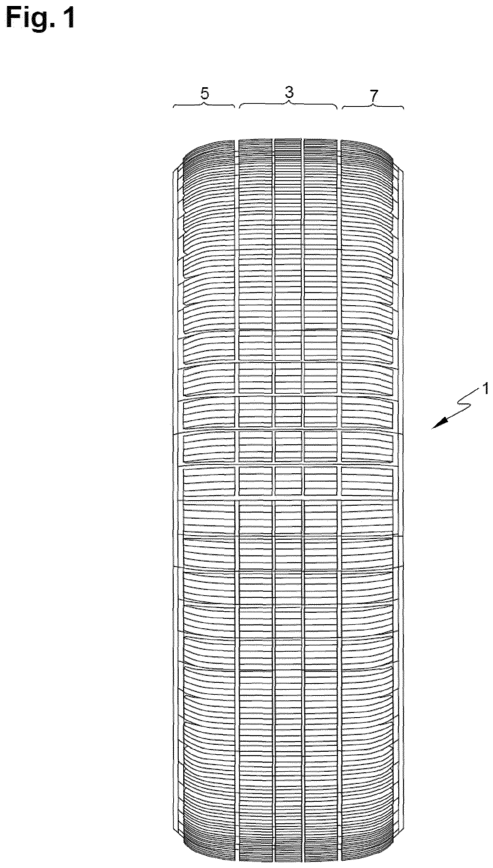

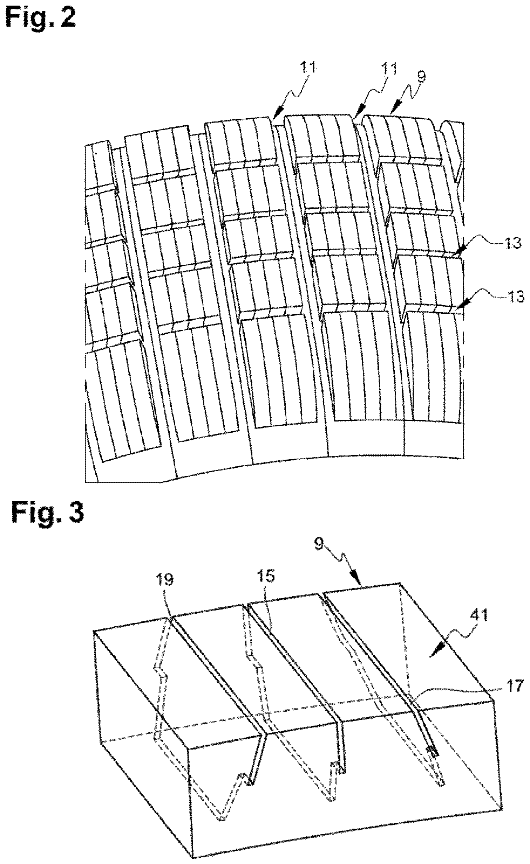

Reference is made to Figure 1 that illustrates a tire 1 and Figure 2 representing a partial view of the tread portion of the tire 1.

The tire 1 includes a tread portion extending in a tire width direction, a pair of sidewall portions (not shown) extending inward in a tire radial direction from both ends of the tread portion and a pair of bead portions (not shown) each provided at an inner end of a corresponding one of the pair of sidewall portions in the tire radial direction. In the tread portion, a plurality of ribs is formed by a plurality of main circumferential grooves (i.e., extending in the tire circumferential direction) which can further be split into blocks. In the present invention the wording "block" is a synonym of "tread block". The tire can be a pneumatic tire or a non-pneumatic tire with it being preferred for the tire to be a pneumatic tire.

For example, the tire is an all-season tire or a winter tire and is preferably a winter tire. For example, the tire is an all-season pneumatic tire or a winter pneumatic tire; with preference, a winter pneumatic tire. For example, the tire is an all-season non-pneumatic tire or a winter non-pneumatic tire. The winter tire and/or the all-season tire may show a "three-peak mountain snowflake" symbol (i.e., "3PMSF" symbol).

The tread pattern of the tire can be symmetric or asymmetric. With preference, the tire has a symmetric tread.

The tire 1 includes from two to five main grooves extending in the tire circumferential direction arranged from a lateral outside (i.e., the right side in Figure 1) to a lateral inside (i.e., the left side in Figure 1). The distinction between outer side and inner side of the tire 1 is relevant in embodiments in which the tire has an asymmetric tread. In such a case, the tires show marks to differentiate the two sides so that the side marked "outside" is oriented towards the outside of the vehicle and the "inside" side is essentially oriented towards the center or centerline of the vehicle when the tire is mounted on the vehicle. The person skilled in the art will adapt the below description without any difficulty to the embodiment wherein the tread of the tire is symmetric, with the outer shoulder portion being symmetrical to the inner shoulder portion with respect to the equatorial plane of the tire. Tires with symmetric treads are devoid of marks to differentiate the two sides. In Figure 1, the tire 1 comprises four main grooves extending in the tire circumferential direction. The main circumferential grooves are depressed inward in the tire radial direction.

The circumferential grooves can be straight (as illustrated in Figure 1) or can extend in a zig-zag shape in the tire circumferential direction (not shown). The outside and inside circumferential grooves define the shoulder portions 5, 7. The portion disposed between the outside/laterally outer main circumferential groove and the inside/laterally inner main circumferential groove forms the central portion 3 of the tire 1.

The tire 1 has a plurality of sipes formed in the tread portion and opened at the radially outer surface of a tread block or a rib. In a preferred embodiment of the invention, illustrated in Figure 2, the tread portion comprises one or more blocks 9, each being delimited by at least one circumferential groove 13 extending in the tire circumferential direction and at least two lateral grooves 11 communicating or intersecting with the at least one circumferential groove 13. The tread portion may also comprise one or more ribs that are not divided into blocks but that have sipes. For example, the sipes (i.e., the straight sipes and/or the inclined sipes) have an open end at the radially outer surface of a tread block or a rib and an innermost end in the tire radial direction, wherein the sipes have a constant thickness along with their length (i.e., from their open end to their innermost end) or have a thickness that is decreasing from their open end to their innermost end. Indeed, in the present invention, the length of a sipe is measured from its open end to its innermost end, following the shape of the sipe. The length of a sipe is equal to or greater than its depth. The depth of a sipe is determined according to the radial direction of the tire. Thus, a straight sipe may have a length that is equal to its depth whereas and inclined sipe will have a length that is greater than its depth for obvious geometrical reasons.

As illustrated in the comparative example of Figure 3, a tire has a plurality of sipes formed in a tread block or a rib and opened at the radially outer surface 41 of a tread block or a rib wherein the tire is having at least one sipe pattern comprising, in the circumferential direction of the tire, one or more straight sipes 15 extending in the radial direction of the tire and two or more inclined sipes 17, 19, wherein at least one straight sipe 15 is arranged between two or more inclined sipes 17, 19. This sipe pattern or arrangement can be found in at least one rib or in at least one block.

In an embodiment, one or more of i) at least one of the shoulder portions and ii) the central portion are block-shaped and comprise blocks 9 delimited by at least one circumferential groove extending in the tire circumferential direction and at least two lateral grooves communicating or intersecting with the at least one circumferential groove; wherein the tire has a plurality of sipes formed in a tread block or a rib and opened at the radially outer surface 41 of a tread block or a rib, wherein one or more blocks 9 and/or one or more ribs have a sipe pattern comprising, in the circumferential direction of the tire, one or more straight sipes 15 extending in the radial direction of the tire arranged between two or more inclined sipes 17, 19.

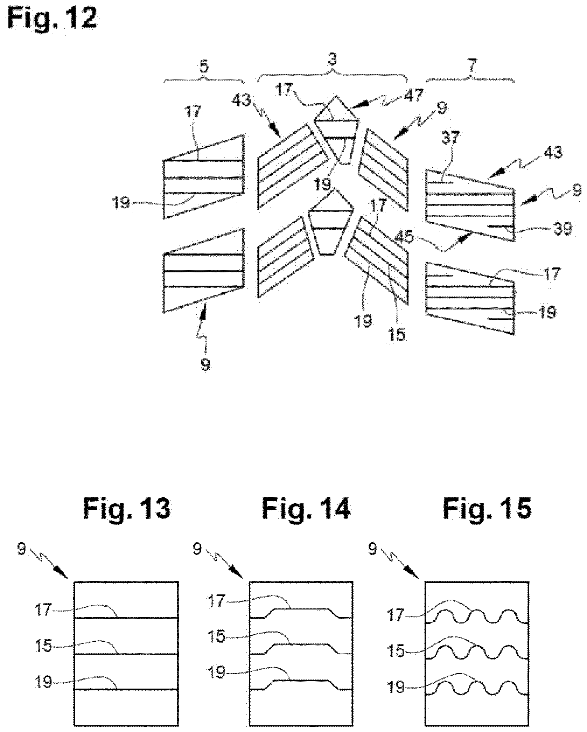

The one or more blocks can be one or more blocks of the central portion and/or one or more blocks of the shoulder portions (i.e., one or more blocks of the inner shoulder portion and/or one or more blocks of the outer shoulder portion). The one or more ribs can be one or more ribs of the central portion and/or one or more ribs of the shoulder portions (i.e., one or more ribs of the inner shoulder portion and/or one or more ribs of the outer shoulder portion). For example, all the blocks and/or all the ribs show the sipe pattern comprising, in the circumferential direction of the tire, one or more straight sipes 15 extending in the radial direction of the tire and two or more inclined sipes 17, 19; wherein at least one straight sipe 15 is arranged between two or more inclined sipes 17, 19. In one embodiment of this invention, the tire comprises two blocks being successive in the circumferential direction of the tire or in the width direction of the tire, and both blocks show the sipe pattern comprising, in the circumferential direction of the tire, one or more straight sipes 15 extending in the radial direction of the tire and two or more inclined sipes 17, 19; wherein at least one straight sipe 15 is arranged between two or more inclined sipes 17, 19. In an embodiment, the tire comprises two blocks being successive in the circumferential direction of the tire or in the width direction of the tire, and only one of the two successive blocks show the sipe pattern comprising, in the circumferential direction of the tire, one or more straight sipes 15 extending in the radial direction of the tire and two or more inclined sipes 17, 19; wherein at least one straight sipe 15 is arranged between two or more inclined sipes 17, 19. An example is provided in Figure 12 wherein the tire comprises combination of blocks 9 with the defined sipe pattern, and blocks 47 that do not show the said sipe pattern. Indeed, in Figure 12, the blocks 47 only show two inclined sipes 17, 19 and not the straight sipe.

In a preferred embodiment, the one or more sipes of the sipe pattern extend through the center of the blocks in the axial direction of the blocks. In a preferred embodiment, the one or more sipes of the sipe pattern extend through the whole blocks (from one lateral side to the other lateral side) or at least extend through the center of the blocks in the axial direction of the blocks. More preferably, the one or more long sipes of the sipe pattern extend through the whole blocks (from one lateral side to the other lateral side) or at least extend through the center of the blocks in the axial direction of the blocks.

The sipe pattern is comprised of at least three sipes; preferably from three to five sipes. Figure 1 illustrates a tread pattern that is not directional but the teaching hereof is also valid for a tire having a directional tread pattern as illustrated in Figure 12.

The sipes of the invention are transversal sipes so that the wording "sipes" and "transversal sipes" are used as synonyms unless the contrary is specified. The sipes may comprise curves or corners but extend mainly in the width direction of the tire. One or more sipes can be parallel to the axial direction or show an angle with the axial direction that is up to 50°. For example, one or more sipes extend along the width of the tire in a direction that has an angle with the axial direction of the tire ranging from 0° to 50°; for example, ranging from more than 0° to 45°; for example, from 1° to 40°; for example, from 5° to 35°; for example, from 10° to 30°. In a preferred embodiment, one or more sipes are parallel to the axial direction wherein "parallel" includes small angles from 0° to 8°; for example, from more than 0° to 5° or from 1° to 5°.

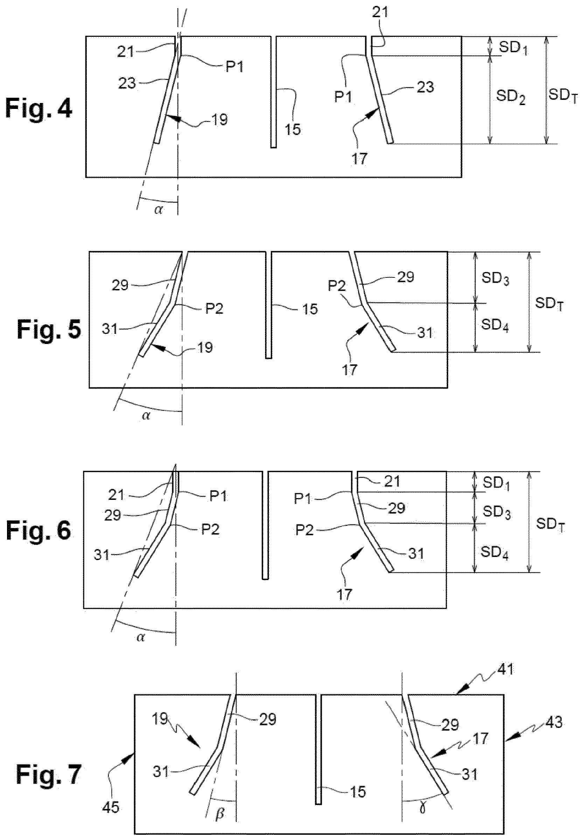

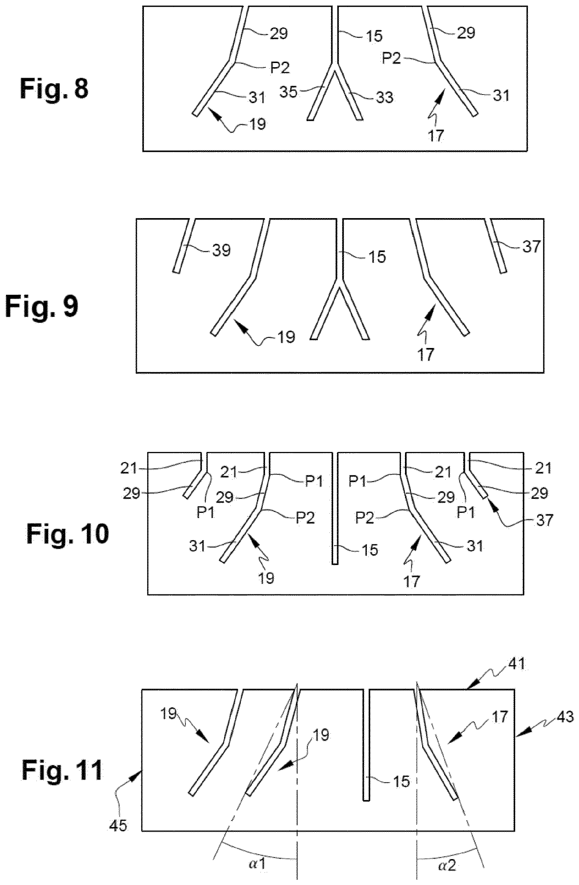

While the one or more straight sipes 15 are extending in the radial direction of the tire or have a main sipe direction extending in the radial direction of the tire; the inclined sipes have a main sipe direction that shows an angle α relative to the radial direction of the tire. The main sipe direction of a sipe, such as the main sipe direction of a straight sipe or the main sipe direction of an inclined sipe, is defined to be the line linking the open end of the sipe at the radially outer surface 41 of a tread block (as shown in Figure 11) or a rib and an innermost end of the sipe in the tire radial direction. It is understood that said line is an imaginary line. The angle α of inclination of the inclined sipes is illustrated, for example, in Figures 4 to 6.

In an embodiment, the angle α of inclination shown by the main sipe direction of the inclined sipes is at most 30° relative to the tire radial direction; preferably, at most 27°; more preferably at most 25°; even more preferably, at most 22° and most preferably, at most 20°.

For example, the angle α of inclination shown by the main sipe direction of the inclined sipes is at least 5° relative to the tire radial direction; preferably, at least 10°; more preferably at least 13°; even more preferably, at least 15° and most preferably, at least 18°.
For example, the angle α of inclination shown by the main sipe direction of the inclined sipes is ranging from 5 to 30° relative to the tire radial direction; preferably from 10 to 27°; more preferably ranging from 15 to 25°; and even more preferably from 18 to 22°.

Unless specified otherwise the wording "inclined sipe" refers to both positively inclined sipe and negatively inclined sipe. As a consequence, the values indicated above for the angle α of inclination are the absolute values of said angle.

The one or more inclined sipes can be positively inclined sipes 17 or negatively inclined sipes 19; the one or more positively inclined sipes 17 are inclined in a direction opposite, relative to the tire radial direction, to the one or more negatively inclined sipes 19. In a view showing a cross-section of a block with a sipe pattern in the circumferential direction of the tire, such as in Figure 3 to 11, wherein the leading edge 43 of the block is at the right side and the trailing edge 45 of the block is at the left side, the positively inclined sipes 17, 37 have a positive angle α of inclination when measured counterclockwise, whereas the negatively inclined sipes 19, 39 have a negative angle α of inclination when measured counterclockwise. Thus, the positively inclined sipes 17, 37 are inclined toward the leading edge 43 of a block 9, whereas the negatively inclined sipes 19, 39 are inclined toward the trailing edge 45 of a block 9. In the present description, any value given for the angle α is its absolute value.

From the figures, it can be understood that the orientation of the inclined sipes 17, 19, 37, 39 in the sipe pattern is selected to have the main sipe direction of the one or more inclined sipes 17, 19, 37, 39 that is intersecting the main sipe direction of the one or more straight sipes 15 outside the tire. Preferably, at least one straight sipe 15 is arranged between at least one positively inclined sipe 17, 37 and at least one negatively inclined sipe 19, 39. Thus, with preference, the one or more straight sipes 15 and the two or more inclined sipes 17, 19, 37, 39 have diverging directions from their open ends to their innermost ends.

Also, it is preferred that at least two sipes 15, 17, 19 of the sipe pattern have a depth of at least 6 mm; preferably at least 7 mm, more preferably at least 8 mm. For example, at least one straight sipe 15 has a depth of at least 6 mm; preferably at least 7 mm, more preferably at least 8 mm. For example, at least one inclined sipe 17, 19 has a depth of at least 6 mm; preferably at least 7 mm, more preferably at least 8 mm. For example, at least one straight sipe 15 and at least one positively inclined sipe 17 and at least one negatively inclined sipe 19 have a depth of at least 6 mm.

In an embodiment, the sipe pattern is symmetrical about the center plane of the sipe pattern taken in the circumferential direction of the tire, as illustrated in Figures 3 to 10. In another embodiment, the sipe pattern is asymmetrical about the center plane of the sipe pattern in the circumferential direction of the tire, as illustrated in Figure 11.

With reference to Figure 11, it can be seen that the angle α of inclination shown by the main sipe direction of at least one positively inclined sipe 17 (denoted a2 in Figure 11) is different from the angle α of inclination shown by the main sipe direction of at least one negatively inclined sipe (denoted a1 in Figure 11). With preference, the angle α of inclination shown by the main sipe direction of at least one positively inclined sipes 17 (denoted a2 in Figure 11) is smaller than the angle α of inclination shown by the main sipe direction of at least one negatively inclined sipe 19 (denoted a1 in Figure 11). This will improve the braking performance of the tire. However, in an embodiment not illustrated, in which the traction performance of the tire shall be improved the person skilled in the art may use a sipe pattern in which the angle α of inclination shown by the main sipe direction of at least one positively inclined sipe is greater than the angle α of inclination shown by the main sipe direction of at least one negatively inclined sipe.

In a preferred embodiment, the one or more inclined sipes comprise at least one fold P1, P2 dividing the inclined sipe in two or more sub-portions being (directly) successive along the length of the sipe. In the latter case, the two or more sub-portions can each be flat or curved along the length of the sipe. In the different embodiments illustrated in Figure 4 to 11, each of the different sub-portions 21, 23, 29, 31 are flat.

In the comparative examples illustrated in Figures 4 and 6 and in the inventive embodiment illustrated in Figure 10, one or more inclined sipes 17, 19 have a straight sub-portion 21 that is extending in the tire radial direction and one or more inclined sub-portions 23, 29, 31.

For example, at least one positively inclined sipe 17 has a straight sub-portion 21 extending in the tire radial direction and one inclined sub-portion 23. For example, at least one positively inclined sipe 17 has a straight sub-portion 21 extending in the tire radial direction and at least two inclined sub-portions 29, 31 successive to each other.

For example, at least one negatively inclined sipe 19 has a straight sub-portion 21 that is extending in the tire radial direction and one inclined sub-portion 23. For example, at least one negatively inclined sipe 19 has a straight sub-portion 21 that is extending in the tire radial direction and at least two inclined sub-portions 29, 31 successive to each other.

The straight sub-portion 21 is preferably arranged at one end of the inclined sipe selected from the open end of the inclined sipe at the radially outer surface of a tread block or a rib and an innermost end of the inclined sipe in the tire radial direction. With preference, the straight sub-portion 21 is arranged at the open end of the inclined sipe 17, 19, 37, 39 at the radially outer surface of a tread block or a rib. With preference, the straight sub-portion 21 is extending in the radial direction of the tire at a depth (SD1) that is ranging from 5% to 20% of the total depth of the inclined sipe (SDT); preferably from 8% to 18%; more preferably from 10% to 1%.

In the comparative exampls illustrated in Figures 5, 7, 8 and 11 and in the inventive embodiment illustrated in Figure 9, one or more inclined sipes 17, 19, 37, 39 are devoid of a straight sub-portion.

As shown in Figures 4 to 11, the inclined sipes show one or more inclined sub-portions (23, 29, 31). In the context of the invention, wherein the inclined sipe shows one or more inclined sub-portions (23, 29, 31), it is preferable that none of the inclined sub-portions (23, 29, 31) should intersect the sipe main direction.

In acomparative embodiment illustrated in Figure 4, one or more inclined sipes (17, 19) have a single inclined sub-portion 23. The straight sub-portion 21 and the sub-portion 23 are connected by a fold P1. As illustrated in Figure 4, when expressed in percentage, the total depth (SDT) of the sipe is the sum of the relative percentage of straight sub-portion 21 (SD1) and the sub-portion 23 (SD2). However, in another embodiment illustrated in Figures 5 to 11, one or more inclined sipes 17, 19 have at least two inclined sub-portions 29, 31, wherein two successive sub-portions being connected by a fold P1, P2. As illustrated in Figure 5, when expressed in percentage, the total depth (SDT) of the sipe is the sum of the relative percentage of the first inclined sub-portion 29 (SD3) and the one or more subsequent inclined sub-portion 31 (SD4).

For example, the angle of inclination relative to the tire radial direction of the single inclined sub-portion 23 is typically within the range of 5° to 20°; preferably from 8° to 18°; and more preferably from 10° to 15°.

For example, one or more inclined sipes have a first inclined sub-portion 29 and at least a subsequent inclined sub-portion 31; wherein the angle β of inclination relative to the tire radial direction of the first inclined sub-portion 29 is different from the angle γ of inclination of the one or more subsequent inclined sub-portion 31. With preference, as illustrated in Figure 7, the angle β of inclination relative to the tire radial direction of the first inclined sub-portion 29 is smaller than the angle γ of inclination of the one or more subsequent inclined sub-portion 31. The first inclined sub-portion 29 is the inclined sub-portion that comprises or is closest to the open end of the inclined sipe 17, 19 at the radially outer surface of a tread block or a rib.

For example, the angle β of inclination relative to the tire radial direction of the first inclined sub-portion is normally within the range of 5° to 20°; preferably from 8° to 18°; and more preferably from 10° to 15°.

Whether the inclined sipes comprise a straight sub-portion or not it is preferred that the first inclined sub-portion 29 shows an innermost end in the tire radial direction arranged to be at a depth that is within the range of 40% to 70% of the total depth of the inclined sipe; preferably from 42% to 60%; and more preferably from 45% to 55 %. It is understood from the figures that the innermost end in the tire radial direction of the first inclined sub-portion 29 is the fold P2, thus the innermost end of the first inclined sub-portion 29 is at a depth corresponding to SD3 as illustrated in Figure 5 or to the sum of SD1 and SD3 as illustrated in Figure 6.

In a sipe pattern according to the invention, the number of positively inclined sipes 17, 37 can be the same or different from the number of negatively inclined sipes 19, 39. If the braking performance is to be improved, it is advantageous that the number of negatively inclined sipes 19, 39 is greater than the number of positively inclined sipes 17, 37. If the traction performance is important, it is advantageous that the number of negatively inclined sipes 19, 39 is smaller than the number of positively inclined sipes 17, 37.

At least two inclined sipes 17, 19, 37, 39 have different depth wherein the one or more inclined sipes being the deepest sipes are long inclined sipes 17, 19 and have a defined depth and at least one inclined sipe is a short inclined sipe 37, 39 having a depth that is reduced and that is within the range of 30% to 70% of the depth of the one or more long inclined sipes 17, 19; preferably within the range of 40% to 60%; and more preferably within the range of 45% to 55%. For example, the depth of the long inclined sipes 17, 19 is ranging from 6 mm to 10 mm; and preferably from 7 mm to 9 mm. It is preferred, as illustrated in Figure 3, that the bottom of each long inclined sipe 17,19 is raised in the vicinity of a position where the long inclined sipe 17,19 opens to a circumferential groove. Such an anchorage of the sipes improve the stiffness of the tire.

For example, the angle α of inclination shown by the main sipe direction of at least one long inclined sipe 17, 19 is different from the angle α of inclination shown by the main sipe direction of at least one short inclined sipe 37, 39. Thus, for example, the angle α of inclination shown by the main sipe direction of at least one long positively inclined sipe 17 is different from the angle α of inclination shown by the main sipe direction of at least one short positively inclined sipe 37. For example, the angle α of inclination shown by the main sipe direction of at least one long negatively inclined sipe 19 is different from the angle α of inclination shown by the main sipe direction of at least one short negatively inclined sipe 39. For example, the angle α of inclination shown by the main sipe direction of at least one long positively inclined sipe 17 is different from the angle α of inclination shown by the main sipe direction of at least one short negatively inclined sipe 39. For example, the angle α of inclination shown by the main sipe direction of at least one long negatively inclined sipe 19 is different from the angle α of inclination shown by the main sipe direction of at least one short positively inclined sipe 37. The values given for angle α are absolute values.

In an embodiment, the angle α of inclination shown by the main sipe direction of at least one long inclined sipe 17, 19 is smaller than the angle α of inclination shown by the main sipe direction of at least one short inclined sipe 37, 39. In another embodiment, the angle α of inclination shown by the main sipe direction of at least one long inclined sipe 17, 19 is equal to or greater than the angle α of inclination shown by the main sipe direction of at least one short inclined sipe 37, 39.

For example, the angle α of inclination shown by the main sipe direction of at least one long inclined sipe 17, 19 is different from the angle α of inclination shown by the main sipe direction of at least one short inclined sipe 37, 39; with preference, the angle α of inclination shown by the main sipe direction of at least one long inclined sipe 17, 19 is smaller than the angle α of inclination shown by the main sipe direction of at least one short inclined sipe 37, 39.

For example, the angle α of inclination shown by the main sipe direction of the long inclined sipes 17, 19 is within the range of 5° to 30° relative to the tire radial direction; preferably from 10 to 27°; more preferably ranging from 15° to 25°; and even more preferably from 18° to 22°. The values given for angle α are absolute values.

For example, the angle α of inclination shown by the main sipe direction of the short inclined sipes 37, 39 is typically within the range of 10° to 30° relative to the tire radial direction; preferably from 15 to 28°; more preferably within the range of 18° to 26°; and even more preferably within the range of 20° to 25°. The values given for angle α are absolute values.

For example, the thickness shown by at least one long inclined sipe 17, 19 is equal to or greater than the thickness shown by at least one short inclined sipe 37, 39. For example, the thickness of a long inclined sipe 17, 19 ranges from 1.05 to 1.50 times the thickness of a short inclined sipe 37, 3; for example, from 1.10 to 1.40 times; for example, from 1.20 to 1.30 times. For example, the thickness of at least one long inclined sipe 17, 19 is at most 0.70 mm; preferably at most 0.60 mm; more preferably at most 0.50 mm; even more preferably at most 0.45 mm; and most preferably at most 0.40 mm. Having short inclined sipes 37, 39 with reduced thickness allows increasing the sipe density in the sipe pattern (i.e., the number of sipes in a given outer surface of the block or the rib).

For example, the one or more long inclined sipes 17, 19 have a first inclined sub-portion 29 and at least a subsequent inclined sub-portion 31 and the one or more short inclined sipes 37, 39 have a single inclined portion or sub-portion 23.

The sipe pattern of the invention comprises one or more straight sipes 15 extending in the radial direction of the tire wherein at least one straight sipe 15 is arranged between two inclined sipes 17, 19, 37, 39. In a preferred embodiment illustrated in Figures 3 to 11, at least one straight sipe is arranged between one or more positively inclined sipes and one or more negatively inclined sipes.

In a view showing a cross-section of a block with a sipe pattern in the circumferential direction of the tire, such as in Figures 3 to 11, wherein the leading edge 43 of the block is at the right side and the trailing edge 45 of the block is at the left side, the sipe pattern may comprise from the leading edge to the trailing edge one or more positively inclined sipes, one or more straight sipes and one or more negatively sipes.

Figures 3 to 8 and 11 show a comparative example and Figures 9 and 10 show embodiments according to the invention, in which the straight sipe 15 or at least one straight sipe 15 has the same depth as the one or more inclined sipes 17, 19 being the deepest, i.e., the long inclined sipes. However, the invention provides for both long straight sipes and short straight sipes. For example, the long straight sipes 15 have a depth that is about the same that the long inclined sipes 17, 19. It is preferred that the bottom of each long straight sipe 15 is raised in the vicinity of a position where the long straight sipe 15 opens to a circumferential groove (as shown in Figure 3).

In an embodiment not illustrated, the sipe pattern comprises at least two straight sipes having different depth so that one or more straight sipes being the deepest are deep straight sipes and have a defined depth and at least one straight sipe is a reduced straight sipe having a depth that is within the range of 30% to 70% of the depth of the one or more deep straight sipes; preferably from 40% to 60%; and more preferably from 45% to 55%.

In one embodiment of this invention, the one or more straight sipes have a reduced depth compared to the inclined sipes or at least the long inclined sipes, so that the one or more straight sipes are one or more reduced straight sipes having a depth that is within the range of 30% to 70% of the depth of the one or more long inclined sipes; preferably from 40% to 60%; and more preferably from 45% to 55%.

In the comparative example of Figure 8 and in the embodiment depicted in Figure 9, one or more of the straight sipes 15 are forked sipes and have their radially inner sub-portion being divided in two branches 33, 35. The radially outer sub-portion is comprising the open end of the sipe at the radially outer surface of a tread block or a rib and the radially inner sub-portion is comprising the two innermost ends of the sipe in the tire radial direction. It is understood that the forked straight sipes have a main sipe direction that is extending in the radial direction of the tire so that the main sipe direction of the forked straight sipes is extending between the two branches 33, 35 of the radially inner sub-portion of the sipe. With preference, the branches are inclined; more preferably the angle of inclination shown by branches 33, 35 is within the range of 5° to 30° relative to the tire radial direction; preferably from 10° to 27°; more preferably ranging from 15° to 25°; and even more preferably from 18° to 22°. The values given for the angle of inclination are absolute values.

If straight sipes 15 are forked, they comprise a radially outer sub-portion opened at the tread surface and a radially inner sub-portion that is divided in two branches. It is preferable that the radially outer portion is extending in the radial direction of the tire at a depth that is within the range of 30% to 70% of the total depth of the straight sipes 15; preferably from 40% to 60%; and more preferably from 45% to 55%. If the forked portion represents 50% or more of the total depth of the sipe, this allows to maintain a certain level of performance of the tire in braking and traction on snow when it is worn, since new inclined sipes (i.e., the two branches) will appear.

With reference to Figures 13 to 15, it can be seen that one or more sipes can be shaped or not in the width (or lateral) direction of the tire. For example, the sipe can be linear in the tread surface view according to the width direction of the tire as illustrated in Figure 13. The invention encompasses embodiments in which one or more sipes show a non-linear shape in the tread surface view in the width direction of the tire; such as a trapezoidal shape in the tread surface view as illustrated in Figure 14 (e.g., if the sipes show a projection portion bent in a trapezoidal manner in the tread surface view, the projection is formed at the center portion of the block in the width direction) or a zig-zag shape or a wave shape in the tread surface view according to the width direction as illustrated in Figure 15.

### Examples

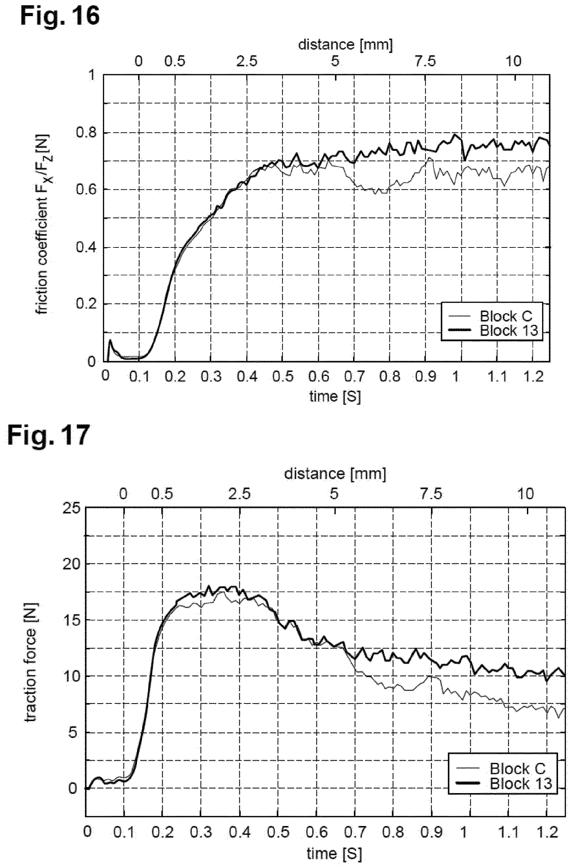

Tests have been performed at -10°C on snow. In a first test, a tire "BLOCK 13" was tested, said tire had blocks with a sipe pattern with three long sipes, wherein the main sipe direction of inclined sipes is intersecting the straight sipe outside the tire and wherein the angle α of the inclined sipes was 10°. The tire has been found to have both higher friction coefficient and traction force when compared to a tire having straight sipes only (i.e., the control tire). Results are provided in the below table and further results are shown in Figures 16 and 17.

| | CONTROL | BLOCK 13 |
|---|---|---|
| Braking | 100 | 102.2 |
| Acceleration | 100 | 100.7 |

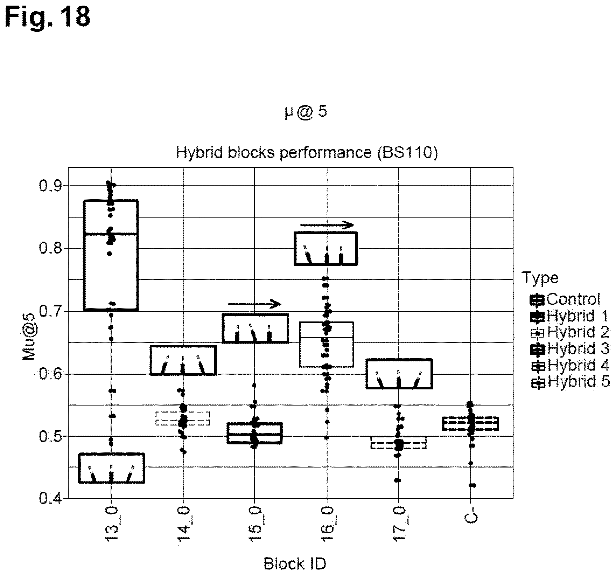

Different sipe patterns have been tested, the results are shown in Figure 18. In this Figure, BLOCK 13 corresponds to Hybrid 1. C is the control block that has only straight long sipes. C is the last example on the right-hand side of Figure 18 and Hybrid 1 is the first example on the left-hand side in Figure 18. Hybrid 2 is the second example, Hybrid 3 is the third example, Hybrid 4 is the fourth example and Hybrid 5 is the fifth example shown from left to right in Figure 18. It can be seen that a higher friction coefficient is obtained for Hybrid 1. Except for Hybrid 5 that had sipes with a depth of about 4 mm (i.e., short sipes only); the depth of the sipes was about 8 mm (i.e., long sipes).

## Claims

1. A tire with a tread portion comprising one or more tread blocks (9) and/or one or more tread ribs, and having a plurality of sipes (15, 17, 19, 37, 39) formed in one or more of the tread blocks (9) and/or in one or more of the tread ribs, each sipe (15, 17, 19, 37, 39) being open at the radially outer surface of a tread block (9) or tread rib;
wherein the tire (1) has at least one sipe pattern comprising, in the circumferential direction of the tire (1), one or more straight sipes (15) extending in the radial direction of the tire (1) and two or more inclined sipes (17, 19, 37, 39);
wherein at least one straight sipe (15) is arranged between two inclined sipes (17, 19, 37, 39);
wherein the inclined sipes (17, 19, 37, 39) have a main sipe direction that is inclined by an angle (a) relative to the radial direction, the main sipe direction of an inclined sipe (17, 19, 37, 39) being the line linking the open end of the sipe (17, 19, 37, 39) at the radially outer surface of a tread block (9) or tread rib and an innermost end of the sipe (17, 19, 37, 39) in the tire radial direction;
wherein one or more inclined sipes (17, 19, 37, 39) are positively inclined sipes (37) and one or more inclined sipes (17, 19, 37, 39) are negatively inclined sipes (39), the one or more positively inclined sipes (37) being inclined in a direction opposite, relative to the tire radial direction, to the one or more negatively inclined sipes (39);
**characterized in that**
one or more inclined sipes (17, 19, 37, 39) comprise at least one fold dividing the inclined sipe (17, 19, 37, 39) in two or more sub-portions (21, 23, 29, 31) being successive along the length of the sipe (17, 19, 37, 39), the length of a sipe (17, 19, 37, 39) being the distance from its open end to its innermost end;
and **in that** at least two inclined sipes (17, 19, 37, 39) extend to different depths, wherein the one or more inclined sipes (17, 19, 37, 39) being the deepest sipes are long inclined sipes and have a defined depth and at least one inclined sipe (17, 19, 37, 39) is a short inclined sipe having a depth that is ranging from 30 to 70 % of the depth of the one or more long inclined sipes (17, 19, 37, 39); the depth of a sipe being determined according to the radial direction of the tire (1).

2. The tire according to claim 1 wherein the one or more straight sipes (15) and the two or more inclined sipes (17, 19, 37, 39) have directions divergent from each other from their open ends to their innermost ends.

3. The tire according to claim 1 or 2 wherein at least one straight sipe (15) is arranged between at least one positively inclined sipe (37) and at least one negatively inclined sipe (39).

4. The tire according to at least one of the previous claims wherein at least two sipes (15, 17, 19, 37, 39) of the sipe pattern have a depth of at least 6 mm.

5. The tire according to at least one of the previous claims wherein one or more inclined sipes (17, 19, 37, 39) have a first inclined sub-portion (29) and at least a subsequent inclined sub-portion (31), and wherein the angle (β) of inclination relative to the tire radial direction of the first inclined sub-portion (29) is smaller than the angle (γ) of inclination of the one or more subsequent inclined sub-portion (31), and, optionally, wherein the first inclined sub-portion (29) has an innermost end in the tire radial direction arranged to be at a depth that is ranging from 40 to 70 % of the total depth of the inclined sipe (17, 19, 37, 39).

6. The tire according to claim 5 wherein none of the inclined sub-portions (29, 31) intersects the sipe main direction of the inclined sipe (17, 19, 37, 39).

7. The tire according to at least one of the previous claims wherein one or more inclined sipes (17, 19, 37, 39) have a straight sub-portion (21) that is extending in the tire radial direction and one or more inclined sub-portions (23, 29, 31), wherein the straight sub-portion (21) is extending in the radial direction of the tire (1) at a depth that is ranging from 8% to 18% of the total depth of the inclined sipe (17, 19, 37, 39).

8. The tire according to claim 7 wherein the straight sub-portion (21) is arranged at the open end of the inclined sipe (17, 19, 37, 39) at the radially outer surface of a tread block (9) or rib.

9. The tire according to at least one of the previous claims wherein the angle (a) of inclination shown by the main sipe direction of the inclined sipes (17, 19, 37, 39) is in a range of from 5° to 30° relative to the tire radial direction of the tire; and/or wherein the angle (a) of inclination shown by the main sipe direction of at least one positively inclined sipe (37) is smaller than the angle (α) of inclination shown by the main sipe direction of at least one negatively inclined sipe (39).

10. The tire according to at least one of the previous claims wherein one or more straight sipes (15) are forked sipes and have their radially inner portion is divided in two branches (33, 35); and/or wherein the number of negatively inclined sipes (39) is equal to or greater than the number of positively inclined sipes (37).

11. The tire according to at least one of the previous claims wherein at least two inclined sipes (17, 19, 37, 39) have a different depth so that one or more inclined sipes (17, 19, 37, 39) being the deepest are long inclined sipes and have a defined depth and at least one inclined sipe (17, 19, 37, 39) is a short inclined sipe having a depth that is ranging from 30% to 70% of the depth of the one or more long inclined sipes.

12. The tire according to at least one of the previous claims wherein the angle (α) of inclination shown by the main sipe direction of at least one long inclined sipe is smaller than the angle (α) of inclination shown by the main sipe direction of at least one short inclined sipe; and/or wherein the thickness shown by at least one long inclined sipe is equal to or greater than the thickness shown by at least one short inclined sipe.

13. The tire according to at least one of the previous claims wherein the one or more long inclined sipes have a first inclined sub-portion and at least a subsequent inclined sub-portion and the one or more short inclined sipes have a single inclined portion or sub-portion.

14. The tire according to at least one of the previous claims wherein at least one long positively inclined sipe and at least one long negatively inclined sipe have a depth of at least 6 mm.

15. The tire according to at least one of the previous claims wherein the tread portion is divided in the tire width direction between a central portion (3) arranged between two shoulder portions (5, 7), and wherein at least one of the central portion (3) or the shoulder portions (5, 7) are rib-shaped or block-shaped and comprise tread blocks (9) delimited by at least one circumferential groove (13) extending in the tire circumferential direction and at least two lateral grooves (11) communicating with the at least one circumferential groove (13).

## Patentansprüche

1. Reifen, der einen Laufflächenabschnitt umfasst, der einen oder mehrere Laufflächenblöcke (9) und/oder eine oder mehrere Laufflächenrippen umfasst und eine Vielzahl von Lamellen (15, 17, 19, 37, 39) aufweist, die in einem oder mehreren der Laufflächenblöcke (9) und/oder in einer oder mehreren der Laufflächenrippen ausgebildet sind, wobei jede Lamelle (15, 17, 19, 37, 39) an der radial äußeren Oberfläche eines Laufflächenblocks (9) oder einer Laufflächenrippe offen ist;
wobei der Reifen (1) mindestens ein Lamellenmuster aufweist, das in der Umfangsrichtung des Reifens (1) eine oder mehrere gerade Lamellen (15), die sich in der radialen Richtung des Reifens (1) erstrecken, und zwei oder mehrere schräge Lamellen (17, 19, 37, 39) umfasst;
wobei mindestens eine gerade Lamelle (15) zwischen zwei geneigten Lamellen (17, 19, 37, 39) angeordnet ist;
wobei die geneigten Lamellen (17, 19, 37, 39) eine Hauptlamellenrichtung aufweisen, die unter einen Winkel (α) relativ zu der radialen Richtung geneigt ist, wobei die Hauptlamellenrichtung einer geneigten Lamelle (17, 19, 37, 39) die Linie ist, die das offene Ende der Lamelle (17, 19, 37, 39) an der radial äußeren Oberfläche eines Laufflächenblocks (9) oder einer Laufflächenrippe und ein innerstes Ende der Lamelle (17, 19, 37, 39) in der radialen Richtung des Reifens verbindet;
wobei eine oder mehrere geneigte Lamellen (17, 19, 37, 39) positiv geneigte Lamellen (37) sind und eine oder mehrere geneigte Lamellen (17, 19, 37, 39) negativ geneigte Lamellen (39) sind, wobei die eine oder mehreren positiv geneigten Lamellen (37) in einer Richtung entgegengesetzt zu der einen oder mehreren negativ geneigten Lamellen (39) in Bezug auf die radiale Richtung des Reifens geneigt sind;
**dadurch gekennzeichnet, dass**
eine oder mehrere geneigte Lamellen (17, 19, 37, 39) mindestens eine Falte aufweisen, die die geneigte Lamelle (17, 19, 37, 39) in zwei oder mehrere Unterabschnitte (21, 23, 29, 31) unterteilt, die entlang der Länge der Lamelle (17, 19, 37, 39) aufeinander folgen, wobei die Länge einer Lamelle (17, 19, 37, 39) der Abstand von ihrem offenen Ende zu ihrem innersten Ende ist;
und dass mindestens zwei geneigte Lamellen (17, 19, 37, 39) sich zu unterschiedlichen Tiefen erstrecken, wobei die eine oder die mehreren geneigten Lamellen (17, 19, 37, 39), die die tiefsten Lamellen sind, lange geneigte Lamellen sind und eine definierte Tiefe aufweisen, und mindestens eine geneigte Lamelle (17, 19, 37, 39) eine kurze geneigte Lamelle ist, die eine Tiefe aufweist, die zwischen 30 und 70% der Tiefe der einen oder der mehreren langen geneigten Lamellen (17, 19, 37, 39) liegt; wobei die Tiefe einer Lamelle in Abhängigkeit von der radialen Richtung des Reifens (1) bestimmt wird.

2. Reifen nach Anspruch 1, wobei die eine oder die mehreren geraden Lamellen (15) und die zwei oder die mehreren geneigten Lamellen (17, 19, 37, 39)voneinander verschiedene Richtungen von ihren offenen Enden zu ihren innersten Enden aufweisen.

3. Reifen nach Anspruch 1 oder 2, wobei mindestens eine gerade Lamelle (15) zwischen mindestens einer positiv geneigten Lamelle (37) und mindestens einer negativ geneigten Lamelle (39) angeordnet ist.

4. Reifen nach mindestens einem der vorhergehenden Ansprüche, wobei mindestens zwei Lamellen (15, 17, 19, 37, 39) des Lamellenmusters eine Tiefe von mindestens 6 mm aufweisen.

5. Reifen nach mindestens einem der vorhergehenden Ansprüche, wobei eine oder mehrere geneigte Lamellen (17, 19, 37, 39) einen ersten geneigten Unterabschnitt (29) und mindestens einen nachfolgenden geneigten Unterabschnitt (31) aufweisen, und wobei der Neigungswinkel ( β) des ersten geneigten Unterabschnitts (29) in Bezug auf die radiale Richtung des Reifens kleiner ist als der Neigungswinkel (γ) des einen oder der mehreren nachfolgenden geneigten Unterabschnitte (31), und, optional, wobei der erste geneigte Unterabschnitt (29) ein innerstes Ende in der radialen Richtung des Reifens hat, das so angeordnet ist, dass es sich in einer Tiefe befindet, die im Bereich von 40 bis 70% der Gesamttiefe der geneigten Lamelle (17, 19, 37, 39) liegt.

6. Reifen nach Anspruch 5, bei dem keiner der geneigten Unterabschnitte (29, 31) die Hauptlamellenrichtung der geneigten Lamelle (17, 19, 37, 39) kreuzt.

7. Reifen nach mindestens einem der vorhergehenden Ansprüche, wobei eine oder mehrere geneigte Lamellen (17, 19, 37, 39) einen geraden Unterabschnitt (21), der sich in der radialen Richtung des Reifens erstreckt, und einen oder mehrere geneigte Unterabschnitte (23, 29, 31) aufweisen, wobei der gerade Unterabschnitt (21) sich in der radialen Richtung des Reifens (1) in einer Tiefe erstreckt, die im Bereich von 8 % bis 18 % der Gesamttiefe der geneigten Lamelle (17, 19, 37, 39) liegt.

8. Reifen nach Anspruch 7, bei dem der gerade Unterabschnitt (21) an dem offenen Ende der schrägen Lamelle (17, 19, 37, 39) an der radial äußeren Oberfläche eines Laufflächenblocks (9) oder einer Rippe angeordnet ist.

9. Reifen nach mindestens einem der vorhergehenden Ansprüche, wobei der Neigungswinkel (α), der durch die Hauptlamellenrichtung der geneigten Lamellen (17, 19, 37, 39) gezeigt wird, in einem Bereich von 5° bis 30° relativ zur Radialrichtung des Reifens liegt; und/oder wobei der Neigungswinkel (α), der durch die Hauptlamellenrichtung von mindestens einer positiv geneigten Lamelle (37) gezeigt wird, kleiner ist als der Neigungswinkel (α), der durch die Hauptlamellenrichtung von mindestens einer negativ geneigten Lamelle (39) gezeigt wird.

10. Reifen nach mindestens einem der vorhergehenden Ansprüche, wobei eine oder mehrere gerade Lamellen (15) gegabelte Lamellen sind und ihr radial innerer Abschnitt in zwei Schenkel (33, 35) geteilt ist; und/oder wobei die Anzahl der negativ geneigten Lamellen (39) gleich oder größer als die Anzahl der positiv geneigten Lamellen (37) ist.

11. Reifen nach mindestens einem der vorhergehenden Ansprüche, wobei mindestens zwei geneigte Lamellen (17, 19, 37, 39) eine unterschiedliche Tiefe haben, so dass eine oder mehrere geneigte Lamellen (17, 19, 37, 39), die am tiefsten sind, lange geneigte Lamellen sind und eine definierte Tiefe haben, und mindestens eine geneigte Lamelle (17, 19, 37, 39) eine kurze geneigte Lamelle ist, die eine Tiefe aufweist, die im Bereich von 30% bis 70% der Tiefe der einen oder mehreren langen geneigten Lamellen liegt.

12. Reifen nach mindestens einem der vorhergehenden Ansprüche, wobei der Neigungswinkel (α), der durch die Hauptlamellenrichtung mindestens einer langen geneigten Lamelle angezeigt wird, kleiner ist als der Neigungswinkel (α), der durch die Hauptlamellenrichtung mindestens einer kurzen geneigten Lamelle angezeigt wird; und/oder wobei die Dicke, die durch mindestens eine lange geneigte Lamelle angezeigt wird, gleich oder größer ist als die Dicke, die durch mindestens eine kurze geneigte Lamelle angezeigt wird.

13. Reifen nach mindestens einem der vorhergehenden Ansprüche, wobei die eine oder die mehreren langen geneigten Lamellen einen ersten geneigten Unterabschnitt und mindestens einen nachfolgenden geneigten Unterabschnitt aufweisen und die eine oder die mehreren kurzen geneigten Lamellen einen einzigen geneigten Abschnitt oder Unterabschnitt aufweisen.

14. Reifen nach mindestens einem der vorhergehenden Ansprüche, wobei mindestens eine lange positiv geneigte Lamelle und mindestens eine lange negativ geneigte Lamelle eine Tiefe von mindestens 6 mm aufweisen.

15. Reifen nach mindestens einem der vorhergehenden Ansprüche, wobei der Laufflächenabschnitt in der Reifenbreitenrichtung zwischen einem zentralen Abschnitt (3), der zwischen zwei Schulterabschnitten (5, 7) angeordnet ist, geteilt ist, und wobei mindestens einer von dem zentralen Abschnitt (3) oder den Schulterabschnitten (5, 7) rippenförmig oder blockförmig ist und Laufflächenblöcke (9) umfasst, die durch mindestens eine Umfangsrille (13), die sich in der Reifenumfangsrichtung erstreckt, und mindestens zwei seitliche Rillen (11), die mit der mindestens einen Umfangsrille (13) in Verbindung stehen, begrenzt sind.

## Revendications

1. Bandage pneumatique qui comprend une portion faisant office de bande de roulement comprenant un ou plusieurs pavés de bande de roulement (9) et/ou une ou plusieurs nervures de bande de roulement, et possédant un certain nombre de lamelles (15, 17, 19, 37, 39) réalisées dans un ou plusieurs des pavés de bande de roulement (9) et/ou dans une ou plusieurs des nervures de bande de roulement, chaque lamelle (15, 17, 19, 37, 39) étant ouverte à la surface externe, dans la direction radiale, d'un pavé de bande de roulement (9) ou d'une nervure de bande de roulement ;
dans lequel le bandage pneumatique (1) possède au moins un modèle de lamelle qui comprend, dans la direction circonférentielle du bandage pneumatique (1), une ou plusieurs lamelles rectilignes (15) qui s'étendent dans la direction radiale du bandage pneumatique (1) et deux lamelles inclinées ou plus (17, 19, 37, 39) ;
dans lequel au moins une lamelle rectiligne (15) est disposée entre deux lamelles inclinées (17, 19, 37, 39) ;
dans lequel les lamelles inclinées (17, 19, 37, 39) possèdent une direction principale de lamelle qui est inclinée en formant un angle (α) par rapport à la direction radiale, la direction principale de lamelle d'une lamelle inclinée (17, 19, 37, 39) représentant la ligne qui relie l'extrémité ouverte de la lamelle (17, 19, 37, 39) à la surface externe, dans la direction radiale, d'un pavé de bande de roulement (9) ou d'une nervure de bande de roulement et une extrémité la plus interne de la lamelle (17, 19, 37, 39) dans la direction radiale du bandage pneumatique ;
dans lequel une ou plusieurs lamelles inclinées (17, 19, 37, 39) représentent des lamelles présentant une inclinaison positive (37) et une ou plusieurs lamelles inclinées (17, 19, 37, 39) représentent des lamelles présentant une inclinaison négative (39), lesdites une ou plusieurs lamelles présentant une inclinaison positive (37) étant inclinées dans une direction opposée, par rapport à la direction radiale, à celle desdites une ou plusieurs lamelles présentant une inclinaison négative (39) ;
**caractérisé en ce que**
une ou plusieurs lamelles inclinées (17, 19, 37, 39) comprennent au moins un pli qui divise la lamelle inclinée (17, 19, 37, 39) en deux portions secondaires ou plus (21, 23, 29, 31) qui se succèdent sur la longueur de la lamelle (17, 19, 37, 39), la longueur d'une lamelle (17, 19, 37, 39) représentant la distance qui sépare son extrémité ouverte de son extrémité la plus interne ;
et **en ce qu'**au moins deux lamelles inclinées (17, 19, 37, 39) s'étendent sur des profondeurs différentes, dans lequel lesdites une ou plusieurs lamelles inclinées (17, 19, 37, 39) qui représentent les lamelles les plus profondes sont des longues lamelles inclinées et possèdent une profondeur définie et au moins une lamelle inclinée (17, 19, 37, 39) est une courte lamelle inclinée qui possède une profondeur qui se situe dans une plage représentant de 30 % à 70 % de la profondeur desdites une ou plusieurs longues lamelles inclinées (17, 19, 37, 39), la profondeur d'une lamelle étant déterminée en se référant à la direction radiale du bandage pneumatique (1).

2. Bandage pneumatique selon la revendication 1, dans lequel lesdites une ou plusieurs lamelles rectilignes (15) et les deux lamelles inclinées ou plus (17, 19, 37, 39) possède des directions qui divergent l'une par rapport à l'autre à partir de leurs extrémités ouvertes jusqu'à leurs extrémités les plus internes.

3. Bandage pneumatique selon la revendication 1 ou 2, dans lequel au moins une lamelle rectiligne (15) est disposée entre au moins une lamelle présentant une inclinaison positive (37) et au moins une lamelle présentant une inclinaison négative (39).

4. Bandage pneumatique selon au moins une des revendications précédentes, dans lequel au moins deux lamelles (15, 17, 19, 37, 39) du même modèle de lamelle possèdent une profondeur d'au moins 6 mm.

5. Bandage pneumatique selon au moins une des revendications précédentes, dans lequel une ou plusieurs lamelles inclinées (17, 19, 37, 39) possèdent une première portion secondaire inclinée (29) et au moins une portion secondaire inclinée (31) qui lui fait suite, et dans lequel l'angle (β) de l'inclinaison formé par rapport à la direction radiale de la première portion secondaire inclinée (29) est inférieur à l'angle d'inclinaison (γ) desdites une ou plusieurs portions secondaires inclinées qui se succèdent (31), et, de manière facultative, dans lequel la première portion secondaire inclinée (29) possède une extrémité la plus interne dans la direction radiale du bandage pneumatique qui est conçue pour se trouver à une profondeur qui se situe dans une plage qui représente de 40 % à 70 % de la profondeur totale de la lamelle inclinée (17, 19, 37, 39).

6. Bandage pneumatique selon la revendication 5, dans lequel aucune des portions secondaires inclinées (29, 31) ne coupe la direction principale de lamelle de la lamelle inclinée (17, 19, 37, 39).

7. Bandage pneumatique selon au moins une des revendications précédentes, dans lequel une ou plusieurs lamelles inclinées (17, 19, 37, 39) possèdent une portion secondaire rectiligne (21) qui s'étend dans la direction radiale et une ou plusieurs portions secondaires inclinées (23, 29, 31), dans lequel la portion secondaire rectiligne (21) s'étend dans la direction radiale du bandage pneumatique (1) à une profondeur qui se situe dans une plage qui représente de 8 % à 18 % de la profondeur totale de la lamelle inclinée (17, 19, 37, 39).

8. Bandage pneumatique selon la revendication 7, dans lequel la portion secondaire rectiligne (21) est disposée à l'extrémité ouverte de la lamelle inclinée (17, 19, 37, 39) à la surface externe, dans la direction radiale, d'un pavé de bande de roulement (9) ou d'une nervure.

9. Bandage pneumatique selon au moins une des revendications précédentes, dans lequel l'angle d'inclinaison (a) formé par la direction principale de lamelle des lamelles inclinées (17, 19, 37, 39) se situe dans une plage allant de 5 degrés à 30 degrés par rapport à la direction radiale du bandage pneumatique ; et/ou dans lequel l'angle d'inclinaison (a) formé par la direction principale de lamelle d'au moins une lamelle (37) présentant une inclinaison positive est inférieur à l'angle d'inclinaison (a) formé par la direction principale de lamelle d'au moins une lamelle (39) présentant une inclinaison négative.

10. Bandage pneumatique selon au moins une des revendications précédentes, dans lequel une ou plusieurs lamelles rectilignes (15) sont des lamelles en forme de fourches et dans lequel leur portion interne, dans la direction radiale, est divisée en deux branches (33, 35) ; et/ou dans lequel le nombre de lamelles inclinées (39) présentant une inclinaison négative est égal ou supérieur au nombre des lamelles inclinées (37) présentant une inclinaison positive.

11. Bandage pneumatique selon au moins une des revendications précédentes, dans lequel au moins deux lamelles inclinées (17, 19, 37, 39) possèdent une profondeur différente d'une manière telle qu'une ou plusieurs lamelles inclinées (17, 19, 37, 39), à savoir les plus profondes, représentent des longues lamelles inclinées et possèdent une profondeur définie et au moins une lamelle inclinée (17, 19, 37, 39) représente une courte lamelle inclinée possédant une profondeur qui se situe dans une plage qui représente de 30 % à 70 % de la profondeur desdites une ou plusieurs longues lamelles inclinées.

12. Bandage pneumatique selon au moins une des revendications précédentes, dans lequel l'angle d'inclinaison (a) formé par la direction principale de lamelle d'au moins une longue lamelle inclinée est inférieur à l'angle d'inclinaison (a) formé par la direction principale de lamelle d'au moins une courte lamelle inclinée ; et/ou dans lequel l'épaisseur présentée par au moins une longue lamelle inclinée est égale ou supérieure à l'épaisseur présentée par au moins une courte lamelle inclinée.

13. Bandage pneumatique selon au moins une des revendications précédentes, dans lequel lesdites une ou plusieurs longues lamelles inclinées possèdent une première portion secondaire inclinée et au moins une portion secondaire inclinée qui y fait suite, et dans lequel lesdites une ou plusieurs courtes lamelles inclinées possèdent une seule portion ou portion secondaire inclinée.

14. Bandage pneumatique selon au moins une des revendications précédentes, dans lequel au moins une longue lamelle présentant une inclinaison positive et au moins une longue lamelle présentant une inclinaison négative possèdent une profondeur qui s'élève à au moins 6 mm.

15. Bandage pneumatique selon au moins une des revendications précédentes, dans lequel la portion faisant office de bande de roulement est divisée, dans la direction de la largeur du bandage pneumatique, entre une portion centrale (3) qui est disposée entre deux portions (5, 7) faisant office d'épaulements, et dans lequel au moins une portion, choisie parmi la portion centrale (3) et les portions (5, 7) faisant office d'épaulements, possède une configuration en forme de nervure ou une configuration en forme de pavé et comprend des pavés de bande de roulement (9) qui sont délimités par au moins une rainure circonférentielle (13) qui s'étend dans la direction circonférentielle du bandage pneumatique et par au moins deux rainures latérales (11) qui communiquent avec ladite au moins une rainure circonférentielle (13).
